# EUROPEAN PATENT APPLICATION

(11) **EP 2 563 026 A2**
(43) Date of publication of application: **27.02.2013**
(21) Application number: 12181302.6
(22) Date of filing: 22.08.2012
(51) Int. Cl.: H04N 13/04

(54) **Transmission of video content**

(30) Priority: 25.08.2011 US 201113217865
(71) Applicant: Comcast Cable Communications, LLC, Philadelphia, PA 19103 (US)
(72) Inventor: Syed, Yasser F., Philadelphia, PA Pennsylvania 19103 (US); Holden, Dan, Philadelphia, PA Pennsylvania 19103 (US)
(74) Representative: Jansen, Cornelis Marinus

(57) **Abstract**

A method and system for viewing video content is described. In one aspect a data stream may be received having at least two signals of uncorrelated two dimensional (2D) video content. For a first frame of video content, a first video image of the 2D video content of a first signal may be generated. For a second frame of video content, a second video image of the 2D video content of a second signal may be generated and the generated video image may be outputted to a display device.

## Description

### BACKGROUND

The disclosure relates generally to transmission and display of video content, and some aspects of the present disclosure relate to transmission, receipt, and rendering of 2-dimensional (2D) video content utilizing 3-dimensional (3D) transmission and display technologies.

If multiple viewers are watching the same display, the viewers typically have to agree to watch the same video content. If there are multiple displays available, different viewers can watch separate video content on the separate displays. This disclosure identifies and addresses scenarios where, for example, it can get difficult for everyone to watch what they want if there is only one display or if everyone desires to be in a common space, or if everyone wants to watch his respective video content on the display that is usually capable of rendering the best quality video, which is often located in a common living space. Conflicts arise when one individual wants to watch a sporting event program while another individual wants to watch a movie program, or when adults in a household want to watch a drama movie program while teenagers want to watch an action movie program.

If only a single television display exists in the house or if the viewers agree to watch in a common living space, one individual can watch her desired video content and another individual can record his desired video content that is not being watched. Yet, this disclosure identifies a shortcoming in that such situations do not allow the two individuals to concurrently watch their respective desired video content on the same television display.

### SUMMARY

In light of the foregoing background, the following presents a simplified summary of the present disclosure in order to provide a basic understanding of some features of the disclosure. This summary is provided to introduce a selection of concepts in a simplified form that are further described below. This summary is not intended to identify key features or essential features of the disclosure.

Some aspects of the present disclosure relate to utilizing 3D transmission and display technologies (e.g. active shutter and passive polarization) to transmit at least two video 2D signals simultaneously within a single video signal to a single display. Individuals who are viewing the display may choose either to watch one or the other video signal with its corresponding audio program using an alternative audio language options. Using 3D active shutter technologies, for example, each 2D video signal may be viewed in full resolution. Using 3D passive polarization technologies, for example, such as side-by-side or top and bottom frame syncing, each 2D video signal may be viewed at half resolution. Still further, this may be expended to multiple 2D programs with multi-view technologies like that in auto stereoscopic glass free technologies.

In accordance with another aspect of the present disclosure, a computing device may receive a data stream such as a single frame synced data stream. The stream may include two or more signals of uncorrelated 2D video content. For a first frame of video content, a first video image of the 2D video content of the first signal may be generated and outputted to a display device. For a subsequent next frame of video content, a second video image of the 2D video content of the second signal may be generated and outputted to the display device. For frames of 2D video content, the output from the display device may alternate between a frame for the first 2D video signal and a frame for the second 2D video signal. In still other configurations, with output display devices that operate at 240 HZ or above, multiple 2Ds signals at different viewable frame rates also may be supported.

In accordance with yet another aspect of the present disclosure, a request to receive a data stream may be received. The data stream may include at least two signals of uncorrelated 2D video content. A first data stream including the first signal of 2D video content and a second data stream including the second signal of 2D video content may be received. The data stream from the received first and second data streams may be generated and transmitted. The stream, e.g., a single frame synced data stream, may include alternating frames of the 2D video content of the first signal and the 2D video content of the second signal. The frame synced data stream may be generated at a central office of a service provider where the transmission may be to a device, such as a gateway display device or set-top box, of an end user. In another example, the frame synced data stream may be generated at a device of an end user where the transmission may be to a display device, such as a video monitor, of the end user.

In accordance with still other aspects of the present disclosure, a user-defined request to view a first signal of 2D video content outputted by a display device may be received by viewing a device such as headgear for viewing the 2D video content. In one example, a first lens for the right eye of a viewer and a second lens for the left eye of the viewer may be configured to permit the viewer to see the first signal of 2D video content outputted by the display device. In addition, the first lens for the right eye of the viewer and the second lens for the left eye of the viewer may be configured to restrict the viewer from seeing a second signal of 2D video content outputted by the display device.

### BRIEF DESCRIPTION OF THE DRAWINGS

Some embodiments of the present disclosure are illustrated by way of example, and not by way of limitation, in the figures of the accompanying drawings and in which like reference numerals refer to similar elements.
FIG. 1 illustrates an example network for streaming of multiple sources of video content in accordance with one or more aspects of the disclosure herein;
FIG. 2 illustrates an example user premises with various communication devices on which various features described herein may be implemented;
FIG. 3 illustrates an example computing device on which various features described herein may be implemented;
FIG. 4 illustrates an example environment for multiple individuals to watch different signals of 2D video content outputted from a display device in accordance with one or more aspects of the present disclosure;
FIG. 5 is an illustrative flowchart of a method for outputting video images in accordance with one or more aspects of the present disclosure;
FIG. 6 is an illustrative flowchart of a method for generation and transmission of a single frame synced data stream in accordance with one or more aspects of the disclosure herein;
FIGS. 7A-7B illustrate example environments for multiple individuals to watch different signals of 2D video content outputted from a display device in accordance with one or more aspects of the present disclosure;
FIGS. 8A-8D illustrate example outputs of 3D enabled active viewing devices in accordance with one or more aspects of the disclosure herein;
FIGS. 9A-9C illustrate example active viewing devices in accordance one or more aspects of the disclosure herein;
FIG. 10A illustrates a flowchart of an example method for switching operation of 3D enabled active viewing devices in accordance with one or more aspects of the disclosure herein; and
FIG. 10B illustrates a flowchart of an example method for switching operation of 3D polarized viewing devices in accordance with one or more aspects of the disclosure herein.

### DETAILED DESCRIPTION

In the following description of the various embodiments, reference is made to the accompanying drawings, which form a part hereof, and in which is shown by way of illustration various embodiments in which features may be practiced. It is to be understood that other embodiments may be utilized and structural and functional modifications may be made.

Aspects of the disclosure may be operational with numerous general purpose or special purpose computing system environments or configurations. Examples of computing systems, environments, and/or configurations that may be suitable for use with features described herein include, but are not limited to, personal computers, server computers, handheld or laptop devices, multiprocessor systems, microprocessor-based systems, set top boxes, digital video recorders, programmable consumer electronics, spatial light modulators, network (e.g., Internet) connectable display devices, network PCs, minicomputers, mainframe computers, distributed computing environments that include any of the above systems or devices, and the like.

The features may be described and implemented in the general context of computer-executable instructions, such as program modules, being executed by one or more computers. Generally, program modules include routines, programs, objects, components, data structures, etc. that perform particular tasks or implement particular abstract data types. Features herein may also be practiced in distributed computing environments where tasks are performed by remote processing devices that are linked through a communications network. In a distributed computing environment, program modules may be located in both local and remote computer storage media including memory storage devices. Concepts of the present disclosure may be implemented for any format or network environment capable of carrying video content.

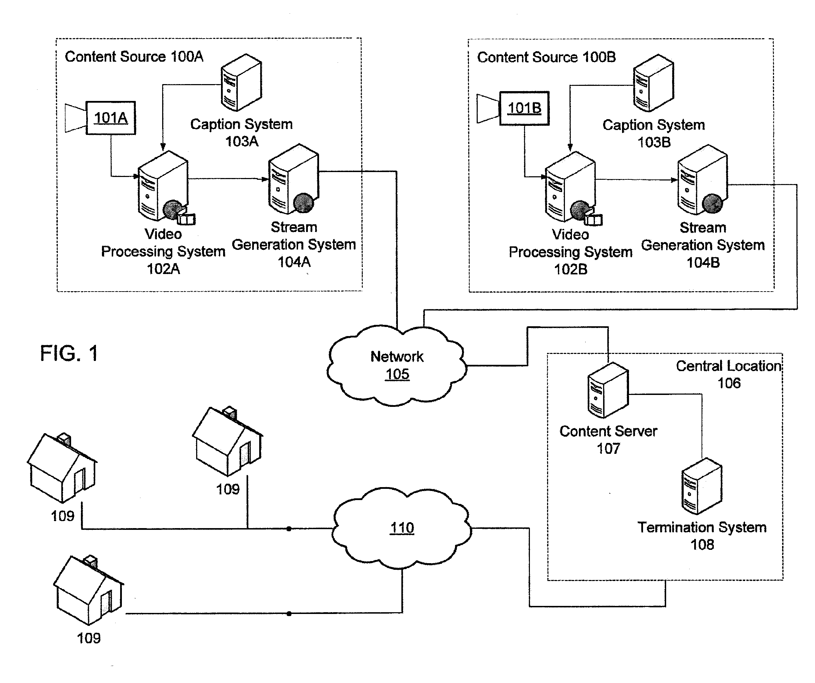

FIG. 1 illustrates an example network for transmitting data, such as streaming video content, in accordance with one or more features of the disclosure. Aspects of the network allow for streaming of video content over a packet switched network, such as the Internet (or any other desired public or private communication network). One or more aspects of the network may deliver video content to network connected display devices. Still other aspects of the network may adapt video content to a variety of network interface devices and/or technologies, including devices capable of rendering two-dimensional (2D) and three-dimensional (3D) content. Further aspects of the network may adapt video content to a variety of distribution (e.g., channel) characteristics. Other aspects of the network adapt the graphics of an output device to viewing preferences of a user.

In one aspect, two-dimensional (2D) video content, such as prerecorded or live 2D video content, may be created and/or offered by one or more 2D content sources 100A and 100B. The content sources 100A and 100B may capture 2D video content using cameras 101A and 101B. Cameras 101A and/or 101B may be any of a number of cameras or other data capture devices that are configured to capture video content. Other sources, such as storage devices or servers (e.g., video on demand servers) may be used as a source for 2D video content. In accordance with an aspect of the present disclosure for 3D technology, cameras 101A and 101B may be configured to capture correlated synchronized video content for a left eye and a right eye, respectively, of an end viewer. As used herein, correlated video content for a left eye and a right eye of a viewer means different video content for a left eye and a right eye of a viewer that together renders the appearance of 3D video content.

The captured video content from cameras 101A and 101B may be used for generation of 2D or 3D video content for further processing and/or transmission to an end user. The data output from the cameras 101A and 101B may be sent to a video processing system 102A and 102B for initial processing of the data. Such initial processing may include any of a number of processing of such video data, for example, cropping of the captured data, color enhancements to the captured data, adding applications, graphics, logos, and association of audio and metadata to the captured video content.

An optional caption system 103A and 103B may provide captioning data or other applications accompanying the video. The captioning data may, for example, contain textual transcripts of spoken words in an audio track that accompanies the video stream. Caption system 103A and 103B may provide textual and/or graphic data that may be inserted, for example, at corresponding time sequences to the data from the video processing system 102A and 102B. For example, data from the video processing system 102A may be 2D video content corresponding to a stream of live content of a sporting event. Caption system 103A may be configured to provide captioning corresponding to audio commentary a sports analyst made during the live sporting event, for example, and video processing system 102A may insert the captioning into one or more video streams from camera 101A. Alternatively, the captioning may be provided as a separate stream from the video stream. Textual representations of the audio commentary of the sports analyst may be associated with the 2D video content by the caption system 103A. Data from the caption system 103A, 103B and/or the video processing system 102A, 102B may be sent to a stream generation system 104A, 104B, to generate a digital data stream (e.g., an Internet Protocol stream) for an event captured by the camera 101A, 101B.

An optional audio recording system may be included within and/or in place of caption system 103A and 103B and may capture audio associated with the video signal from the cameras 101A and 101B and generate corresponding audio signals. Alternatively, cameras 101A, 101B may be adopted to capture audio. The audio captured may, for example, include spoken words in an audio track that accompanies the video stream and/or other audio associated with noises and/or other sounds. The audio recording system may generate an audio signal that may be inserted, for example, at corresponding time sequences to the captured video signals in the video processing system 102A and 102B.

The audio track may be directly associated with the images captured in the video signal. For example, cameras 101A and/or 101B may capture and generate data of a video signal with an individual talking and the audio directly associated with the captured video may be spoken words by the individual talking in the video signal. Alternatively and/or concurrently, the audio track also may be indirectly associated with the video stream. In such an example, the cameras 101A and/or 101B may capture and generate data of a video signal for a news event and the audio indirectly associated with the captured video may be spoken words by a reporter not actually shown in the captured video.

For example, data from the video processing system 102A may be 2D video content corresponding to live video content of a sporting event. The audio recording system may be configured to capture and provide audio commentary of a sports analyst made during the live sporting event, for example, and an optional encoding system may encode the audio signal to the video signal generated from camera 101A. Alternatively, the audio signal may be provided as a separate signal from the video signal. The audio signal from an audio recording system and/or an encoding system may be sent to a stream generation system 104, to generate one or more digital data streams (e.g., Internet Protocol streams) for the event captured by the cameras 101A, 101B.

The stream generation system 104A and 104B may be configured to convert a stream of captured and processed video data from cameras 101A and 101B, respectively, into a single data signal, respectively, which may be compressed. The caption information added by the caption system 103A, 103B and/or the audio signal captured by the cameras 101A, 101B and/or an optional audio recording system also may be multiplexed with the respective stream. As noted above, the generated stream may be in a digital format, such as an IP encapsulated format. Stream generation system 104A and 104B may be configured to encode the 2D video content for a plurality of different formats for different end devices that may receive and output the 2D video content. As such, stream generation system 104A and 104B may be configured to generate a plurality of Internet protocol (IP) streams of encoded 2D video content specifically encoded for the different formats for rendering.

In addition, stream generation system 104A and 104B may be configured to generate a plurality of Internet protocol (IP) streams (or another protocol) of encoded 3D video content specifically encoded for the different formats for rendering. For example, one of the IP streams may be for rendering the 3D video content on a display associated with a viewing device such as a polarized headgear system, while another one of the IP streams may be for rendering the 3D video content on a display associated with an anaglyph headgear system. In yet another example, a source may supply two different videos, one for the left eye and one for the right eye. Then, an end device may take those videos and process them for separate viewing. Any of a number of technologies for viewing rendered 3D video content may be utilized in accordance with the concepts disclosed herein. Although anaglyph and polarized viewing devices, e.g., headgear, are used as examples herein, other 3D headgear types can be used as well, such as active shutter and dichromic gear and technology using glass free lenticular arrays on the monitor itself.

In one aspect, the single or multiple encapsulated IP streams may be sent via a network 105 to any desired location. The network 105 can be any type of communication network, such as satellite, fiber optic, coaxial cable, cellular telephone, wireless (e.g., WiMAX), twisted pair telephone, etc., or any combination thereof (e.g., a hybrid fiber coaxial (HFC) network). In some embodiments, a service provider's central location 106 may make the content available to users.

The central location 106 may include, for example, a content server 107 configured to communicate with content sources 100A and 100B via network 105. The content server 107 may receive requests for the 2D video content or 3D video content from a user, and may use termination system, such as a termination system 108 to deliver the uncorrelated (2D) or correlated (3D) video content to user premises 109 through a network 110. Similar to network 105, network 110 can be any type of communication network, such as satellite, fiber optic, coaxial cable, cellular telephone, wireless (e.g., WiMAX), twisted pair telephone, etc., or any combination thereof (e.g., a hybrid fiber coaxial (HFC) network) and may include one or more components of network 105. The termination system 108 may be, for example, a cable modem termination system operating according to a standard. In an HFC network, for example, components may comply with the Data Over Cable System Interface Specification (DOCSIS), and the network 110 may be a series of coaxial cable and/or hybrid fiber/coax lines. Alternative termination systems may use optical network interface units to connect to a fiber optic communication line, digital subscriber line (DSL) interface circuits to connect to a twisted pair telephone line, satellite receiver to connect to a wireless satellite line, cellular telephone transceiver to connect to a cellular telephone network (e.g., wireless 3G, 4G, etc.), and any other desired termination system that can carry the streams described herein.

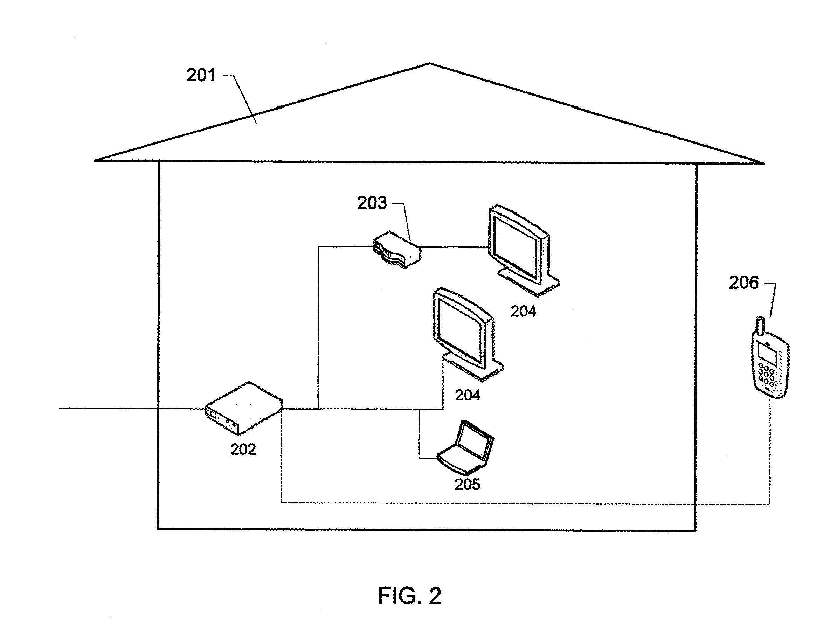

Termination system 108 further may include a frame syncing system, which may be combined as a computing device as depicted in Figure 2 (discussed below). A frame syncing system may be configured to compare time codes for each frame of video content in a first video signal with those for each frame of video content in a second signal. In 3D environments, the frame syncing system may match frames by time codes to produce a correlated frame synced video signal in which each frame contains the left and right eye data, e.g., images, which occur at the same time in a correlated video program. In the example of 3D video content for viewers, a frame synced video signal may be utilized by an output device of a viewer. The output device may output the frame synced video signal in a manner appropriate for a corresponding viewing device to render the video as a 3D video appearance. The resulting output from the frame syncing system may be a single stream of the frame synced signal.

For example, a viewer may utilize an active shutter headgear/eye gear that reads a video signal from an output device as an over/under format. In such an example, the active shutter headgear may be configured to close the shutters for one eye and open the shutters of the other eye of the headgear per respective frame of correlated video content. As such, an appearance of 3D images may be created for a viewer. At a fast enough frame rate, full resolution instantiation may be implemented as well.

Options for methods of frame syncing a first video signal with a second video signal include, but are not limited to, over/under syncing, e.g., top/bottom, side by side full syncing, alternative syncing, e.g., interlaced, frame packing syncing, e.g., a full resolution top/bottom format, checkerboard syncing, line alternative full syncing, side-by-side half syncing, and 2D+ depth syncing. These example methods are illustrative and additional methods may be utilized in accordance with aspects of the disclosure herein.

In the same 3D technical environments, 2D video content may be transmitted and utilized in a similar fashion to frame sync two uncorrelated 2D video signals in a single video signal. In such a configuration, the frame syncing system may match frames for each uncorrelated 2D video signal by time codes to produce a frame synced video signal in which each frame contains the data, e.g., images, which occur at the same time in the respective 2D video signals. In the example of 2D video content for viewers, a frame synced video signal may be utilized by an output device of a viewer. The output device may output the frame synced video signal in a manner appropriate for a corresponding viewing device to render the video for one of the two 2D video signals. The resulting output from the frame syncing system may be a single stream of the frame synced signal.

For example, a viewer may utilize active shutter headgear/eye gear that reads a video signal from an output device as an over/under format. In such an example, the active shutter headgear may be configured to close the shutters for both eyes and open the shutters of both eyes of the headgear per respective frame of uncorrelated video content. Depending upon whether the individual has configured her headgear to watch the first 2D video signal in the single video signal or the second 2D video signal, the headgear may be configured to utilize the top half of the frame (such as for the first 2D video signal) or the bottom half of the frame (such as for the second 2D video signal).

As noted above, options for methods of frame syncing a first video signal with a second video signal include, but are not limited to, over/under syncing, e.g., top/bottom, side by side full syncing, alternative syncing, e.g., interlaced, frame packing syncing, e.g., a full resolution top/bottom format, checkerboard syncing, line alternative full syncing, and side-by-side half syncing. These example methods are illustrative and additional methods may be utilized in accordance with aspects of the disclosure herein.

In the example of an audio signal included with one or both of the video signals as a combined signal, a frame syncing system may be configured to sync the respective audio signals with the frame synced video signal. The process of syncing the audio signals by a frame syncing system may include identifying a time sequence of the frame synced video signal to insert the corresponding audio signals. Audio may come in as different audio tracks in the same 3D signal or separately carried for each channel as well.

Depending upon the desire to have full resolution video signals or half resolution video signals, a frame syncing system may be configured to operate in one or the other manner. For half resolution, such as side-by-side or top and bottom frame syncing, each 2D video signal may be frame synced together at half the original resolution of the two 2D video signals. For full resolution, full resolution frames of each 2D video signal would alternate in transmission. Although described with respect to FIG. 1 at a central office 106, this process of frame syncing alternatively and/or concurrently may be implemented at a dual tuner computing device, such as a gateway, e.g., gateway 202 in FIG. 2, or set-top box, within the premises of an end user. At a central office, such as central office 106, the two 2D video signals are preselected to be transmitted in a frame synced state. At a dual-tuner computing device, the two 2D video programs may be selected by both viewers and the frame syncing may be implemented at the computing device and then sent to a display device.

User premises, such as a home 201 described in more detail below, may be configured to receive data from network 110 or network 105. The user premises may include a network configured to receive encapsulated 2D and/or 3D video content and distribute such content to one or more viewing devices, such as televisions, computers, mobile video devices, 3D headsets, etc. The viewing devices, or a centralized device, may be configured to adapt graphics of an output device to 2D or 3D viewing preferences of a user. For example, 3D video content for output to a viewing device may be configured for operation with a polarized lens headgear system. As such, a viewing device or centralized server may be configured to recognize and/or interface with the polarized lens headgear system to render an appropriate 3D video image for display.

FIG. 2 illustrates a closer view of user premises 201, such as a home, that may be connected to an external network, such as the network 110 in FIG. 1, via an interface. An external network transmission line (coaxial, fiber, wireless, etc.) may be connected to a gateway, e.g., device, 202. The gateway 202 may be a computing device configured to communicate over the network 110 with a provider's central office 106.

The gateway 202 may be connected to a variety of devices within the user premises 201, and may coordinate communications among those devices, and between the devices and networks outside the user premises 201. For example, the gateway 202 may include a modem (e.g., a DOCSIS device communicating with a CMTS), and may offer Internet connectivity to one or more computers 205 within the user premises 201 and one or more mobile devices 206 within and/or outside of user premises 201. Although not shown, mobile devices 206 may communicate with gateway 202 through another device and/or network, such as network 105 and/or 110. The connectivity may also be extended to one or more wireless routers 203. For example, a wireless router may be an IEEE 802.11 router, local cordless telephone (e.g., Digital Enhanced Cordless Telephone - DECT), or any other desired type of wireless network. Various wireless devices within the home, such as a DECT phone (or a DECT interface within a cordless telephone), a portable media player, portable laptop computer 205, and mobile devices 206, may communicate with the gateway 202 using a wireless router 203.

The gateway 202 may also include one or more voice device interfaces to communicate with one or more voice devices, such as telephones. The telephones may be traditional analog twisted pair telephones (in which case the gateway 202 may include a twisted pair interface), or they may be digital telephones such as a Voice Over Internet Protocol (VoIP) telephones, in which case the phones may simply communicate with the gateway 202 using a digital interface, such as an Ethernet interface.

The gateway 202 may communicate with the various devices within the user premises 201 using any desired connection and protocol. For example, a MoCA (Multimedia Over Coax Alliance) network may use an internal coaxial cable network to distribute signals to the various devices in the user premises. Alternatively, some or all of the connections may be of a variety of formats (e.g., MoCA, Ethernet, HDMI, DVI, twisted pair, etc.), depending on the particular end device being used. The connections may also be implemented wirelessly, using local wi-fi, WiMax, Bluetooth, or any other desired wireless format.

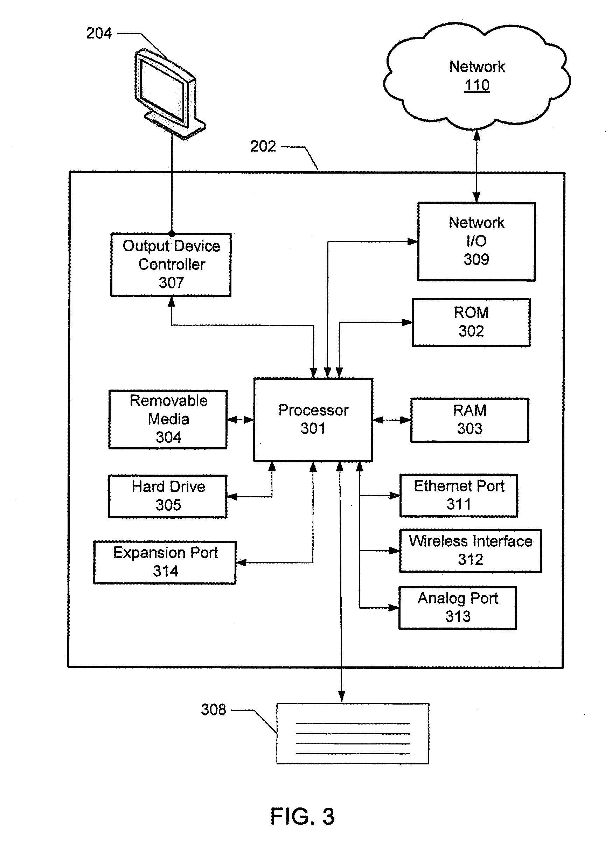

The gateway 202, which may comprise any processing, receiving, and/or displaying device, such as one or more televisions, smart phones, set-top boxes (STBs), digital video recorders (DVRs), gateways, etc., can serve as a network interface between devices in the user premises and a network, such as the networks illustrated in FIG. 1. Additional details of an example gateway 202 are shown in Figure 3, discussed further below. The gateway 202 may receive content via a transmission line (e.g., optical, coaxial, wireless, etc.), decode it, and may provide that content to users for consumption, such as for viewing 2D or 3D video content on a display of an output device 204, such as a 2D or 3D ready display such as a monitor, a tablet, or a projector. Alternatively, televisions, or other viewing output devices 204, may be connected to the network's transmission line directly without a separate interface device, and may perform the functions of the interface device or gateway. Any type of content, such as video, video on demand, audio, Internet data etc., can be accessed in this manner.

Figure 3 illustrates a computing device that may be used to implement the gateway 202, although similar components (e.g., processor, memory, non-transitory computer-readable media, etc.) may be used to implement any of the devices described herein. The gateway 202 may include one or more processors 301, which may execute instructions of a computer program to perform any of the features described herein. Those instructions may be stored in any type of non-transitory computer-readable medium or memory, to configure the operation of the processor 301. For example, instructions may be stored in a read-only memory (ROM) 302, random access memory (RAM) 303, removable media 304, such as a Universal Serial Bus (USB) drive, compact disc (CD) or digital versatile disc (DVD), floppy disk drive, or any other desired electronic storage medium. Instructions may also be stored in an attached (or internal) hard drive 305. Gateway 202 may be configured to process two or more separate signals as well, e.g., dual tuner capabilities. Gateway 202 may be configured to combine the two 2D signals rather than receiving a combined signal from a headend or central office.

The gateway 202 may include or be connected to one or more output devices, such as a display 204 (or, e.g., an external television that may be connected to a set-top box), and may include one or more output device controllers 307, such as a video processor. There may also be one or more user input devices 308, such as a wired or wireless remote control, keyboard, mouse, touch screen, microphone, etc. The gateway 202 also may include one or more network input/output circuits 309, such as a network card to communicate with an external network, such as network 110 in FIG. 1, and/or a termination system, such as termination system 108 in FIG. 1. The physical interface between the gateway 202 and a network, such as network 110 illustrated in FIG. 1 may be a wired interface, wireless interface, or a combination of the two. In some embodiments, the physical interface of the gateway 202 may include a modem (e.g., a cable modem), and the external network may include a television content distribution system, such as a wireless or an HFC distribution system (e.g., a DOCSIS network).

The gateway 202 may include a variety of communication ports or interfaces to communicate with the various home devices. The ports may include, for example, an Ethernet port 311, a wireless interface 312, an analog port 313, and any other port used to communicate with devices in the user premises. The gateway 202 may also include one or more expansion ports 314. The expansion port 314 may allow the user to insert an expansion module to expand the capabilities of the gateway 202. As an example, the expansion port 314 may be a Universal Serial Bus (USB) port, and can accept various USB expansion devices. The expansion devices may include memory, general purpose and dedicated processors, radios, software and/or I/O modules that add processing capabilities to the gateway 202. The expansions can add any desired type of functionality, several of which are discussed further below.

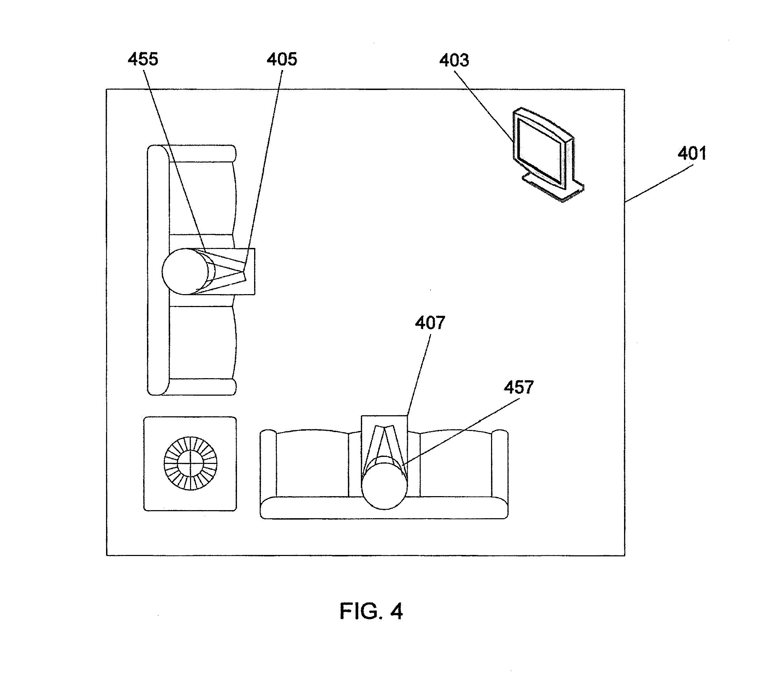

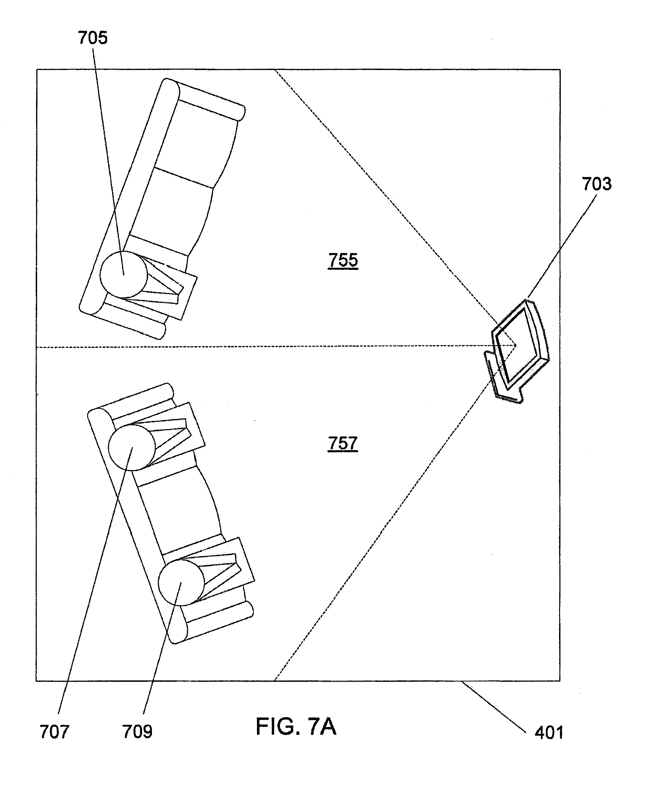

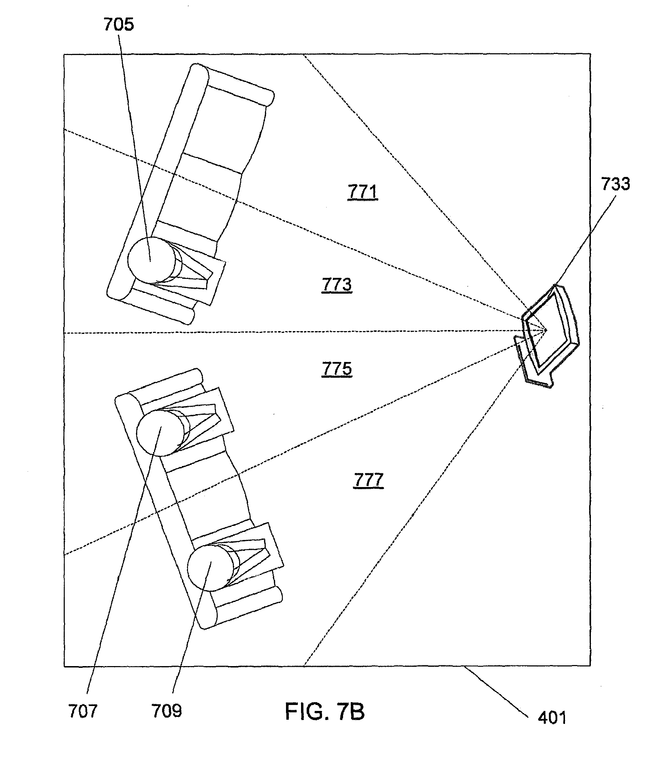

FIG. 4 illustrates an example environment for multiple individuals to watch different signals of 2D video content outputted from a single display device in accordance with one or more aspects of the present disclosure. In the example environment of FIG. 4, two individuals, individual 405 and individual 407, may be in a common living space 401 and may desire to watch different signals of video content. Individual 405 may want to watch a movie program being shown by a particular TV network on one channel while individual 407 may want to watch a sporting event program being shown by a different particular TV network on a different channel. Utilizing 3D technology for rendering of video content for two different eyes of a viewer in a frame synced manner, the two video signals, the movie program and the sporting event program, may be outputted on a single display 403. Whether utilizing active shutter technology or passive polarization technology in headgear 455 (or another viewing device) for individual 405 and headgear 457 (or another viewing device) for individual 407, both individuals 405 and 407 may watch a different video signals on the same display device 403. Display device 403 may include, for example, display 204 from FIGS. 2 and 3. As should be understood, individuals 405 and 407 each may move around the common living space 401 with active shutters or passive glasses. For auto-stereoscopic technology, there would be specific location, such as illustrated and described herein with respect to FIGS. 7A and 7B in regards to what channel they see.

Signals of 2D video content outputted from a single display device as described herein and illustrated in FIG. 4 is not limited to 2D video content of a television program. 2D video content may be any 2D video content accessible and/or retrievable by a viewer. 2D video content may include web based video content accessible over an open network, such as the Internet. In the example of FIG. 4, individual 405 may be watching a television episode of a science fiction drama and individual 407 may be watching a 2D video retrieved through a web site. 2D video content may be a web site accesses by an individual as well. As such, one individual may be watching a television episode and another may be surfing the Internet.

Returning to FIG. 4, display device 403 may in one example be a 3D active matrix or passively polarized television monitor that can operate at 120 MHz and or above, such as at in the 240 MHz range. The frequency minimum of 120 MHz allows for flashing frames or fields at least at 60 frames per second (fps). Such a minimum threshold allows for each eye of a viewer to see at frame rates for high definition (e.g., at least 60 fps). In alternative embodiments, frequencies lower than 120 MHz may be utilized, such as 48 MHz or 60 MHz, where the frames or fields are at 24 fps or 30 fps, respectively. In still other embodiments, frequencies higher than 120 MHz may be utilized, such as 240 MHz or 480 MHz.

Active shutter technology or passive polarization technology in a headgear may be modified or otherwise used to allow for reception of two signals of uncorrelated 2D video content in place of correlated 3D video content normally utilized with respect to such headgear. The transmission system set up between the display 403 and the headgear 455 or 457 may be modified from allowing a separate image stream for a right or a left eye to be seen in either one eye or the other, to allowing only one image stream to be seen in both eyes at a frame or field rate that may be around 60 fps. For active shutter technology, both the right and the left lenses may be closed at the same time instead of alternating them. For passive polarized technology, the same polarization orientation may be implemented in both the right and left lenses.

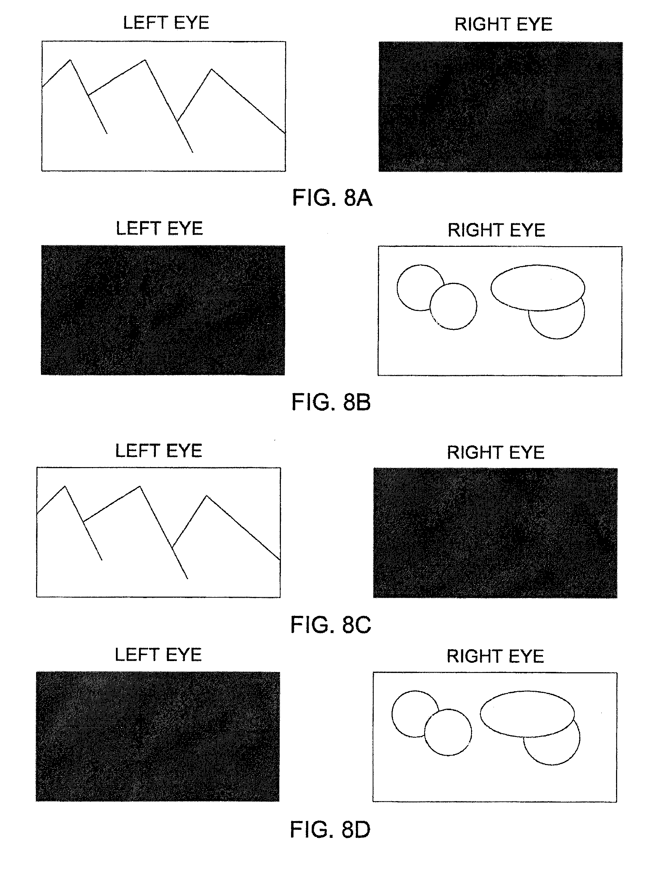

In an example of active shutter technology headgear, every other frame or field of 2D video content outputted to a display device, such as display device 403, is a first signal of 2D video content and the alternating frame of field is a second signal of 2D video content. FIGS. 8A-8D illustrate example outputs of 3D enabled active shutter glasses in accordance with such an example. FIGS. 8A-8D may be an example of four frames of 2D video content. In 3D active shutter glasses, to render 3D video to a viewer, a first frame is sent for the left eye of a viewer and the right eye is shut/closed to receive no content. The next frame is sent for the right eye of a viewer and the left eye is shut/closed to receive no content. This sequence is repeated of opening and closing the lenses for the eyes per frame received. In rendering the appearance of 3D video content, the eyes see slightly different images and together it appears as in 3D to a viewer. Aspects of the present disclosure utilize a similar concept for respective output for rendering different uncorrelated 2D video content. The frame rate is higher to support this capability and makes the content appear like 3D content at the same frame rate as a normal 2D signal.

In the example of FIGS. 8A-8D for rendering of two different uncorrelated 2D video signals, a left eye stream may be devoted to rendering of one of the two 2D video signals and the right eye stream may be devoted to the rendering of the other 2D video signal. In FIG. 8A, the left eye stream may show a frame of the first 2D video signal. If an individual, such as individual 405 in FIG. 4, has chosen to see the first 2D video signal, she may have her headgear, such as headgear 455, configured to receive only the left eye video stream and to render the frame to both eyes of the individual. Instead of alternating the left eye and right eye opening and shutting the lenses, both eyes are open at the same time to allow the individual to see the frame for the first 2D video signal and to shut the lenses for both eyes for the next frame of 2D video content that is for the second 2D video signal. FIGS. 8A-8D illustrate four frames of 2D video content. The left eye stream may be configured for the first 2D video signal and the right eye may be configured for the second 2D video signal. The left eye feed is shown on the left side and the concurrent right eye feed is shown on the right side. For the first frame in FIG. 8A, which is for the first 2D video signal, headgear for an individual wanting to see the first 2D video signal may be configured to be open to allow a viewer to see the first 2D video signal. Concurrently, as shown in FIG. 8A, headgear for an individual wanting to see the second 2D video signal may be configured to be shut/closed to prevent a viewer from seeing the first 2D video signal.

For the next frame in FIG. 8B, which is for the second 2D video signal, the headgear for the individual wanting to see the first 2D video signal may be configured to be shut/closed to prevent the viewer from seeing the second 2D video signal. Concurrently, headgear for the individual wanting to see the second 2D video signal may be configured to be open to allow a viewer to see the second 2D video signal. FIGS. 8C and 8D repeat the alternating sequence of frames for respective 2D video signals where headgear for the respective viewer may be configured to be open or closed depending on the rendered output. As a result, alternating frames of 2D video content may be seen by different individuals and, as such, the individuals may watch different 2D video signals outputted by the same display device.

Another aspect of the present disclosure allows for output of an audio stream associated with the rendered 2D video signal. In terms of transmitting audio, each 2D video signal being displayed may need to have a separate audio channel. The headgear of an individual may be modified to tune into the correct audio channel associated with the 2D video content that the individual desires to watch. In one example situation for multiple individuals watching two different 2D video signals, a first 2D video signal may be viewed through the headgear as described herein with the associated audio coming out normally through speakers that may be associated with the display device. The viewer of the second 2D video signal through headgear as described herein would need a separate listening device that can tune into the audio signal associated with the second 2D video signal. Outputting the audio for both 2D video signals through conventional speakers associated with the display device would not be desired as discerning the different audio per individual would be annoying to viewers. Alternatively, the viewer of the second 2D video signal may have a headgear as described herein with headphones or a separate set of associated headphones. In such a situation, each individual would be able to listen to associated audio for the respective 2D video signal being watched. In yet another embodiment, both individuals may have a separate pair of headphones to tune into the appropriate audio channel for the 2D video signal being watched. In still another embodiment, a directional sound system may be employed such as the Audio Spotlight® by Holosonics® where each of the individuals is located in a different portion of the common living space assigned to an Audio Spotlight® which can generate the sound for the particular signal chosen by the user while the other user can listen to the sound for the particular signal they have chosen.

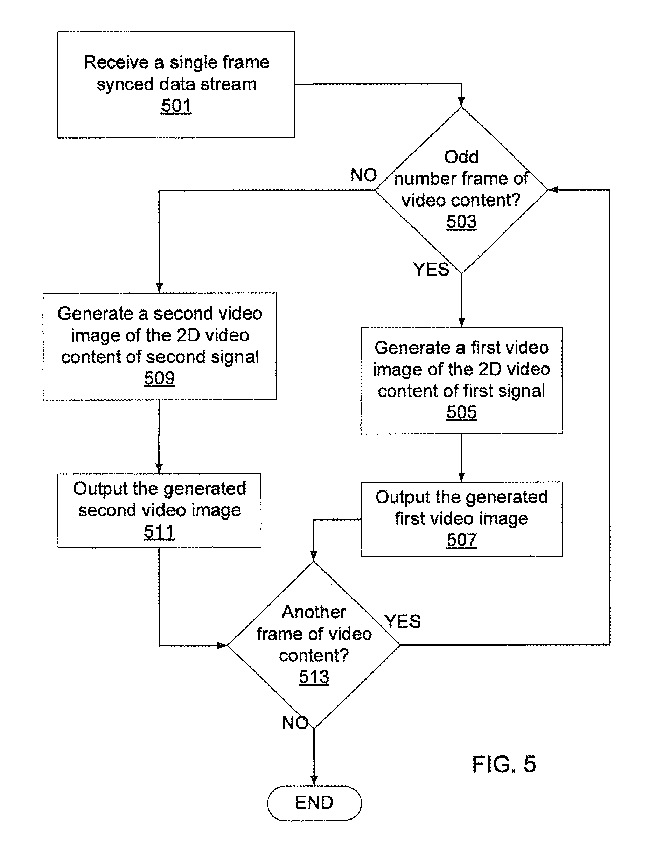

FIG. 5 is an illustrative flowchart of a method for outputting video images in accordance with one or more aspects of the present disclosure. FIG. 5 illustrates an example where a device, such as gateway 202 in FIGS. 2 and 3, a set-top box or a display device of an end user, may be configured to operate a process for outputting video images for two different 2D video signals. In 501, a device may receive a single frame synced data stream, such as from network 110 in FIG. 3. The frame synced data stream may include at least two different signals of 2D video content. A determination may be made in 503 as to whether a next frame/field of 2D video content to output is an odd numbered frame/field, such as frame number 1, 3, 5, 7, etc. Such a determination may be made by processor 301 in FIG. 3. If the next frame is an odd numbered frame, in 505, the device may generate a first video image of the 2D video content of the first signal. In 507, the generated first video image may be outputted to a display device, such as display screen 204 in FIG. 3, a TV screen, or monitor of an end user that is operatively coupled to the device.

If the next frame is not an odd numbered frame, but rather an even numbered frame/field such as frame number 2, 4, 6, 8, etc., the process moves to 509, where the device may generate a second video image of the 2D video content of the second signal. In 511, the generated second video image may be outputted to the display device. From either 507 or 511, the process may proceed to 513 where a determination may be made as to whether another frame of 2D video content is available. If not, such as the user having turned the device off, the process may end. Else, if another frame of 2D video content is available, the process may return to 503. By returning to 503 for each respective frame of 2D video content, the device may alternate images outputted to a display device between the first 2D video signal and the second 2D video signal. As described herein, an individual with headgear configured to watch the first 2D video signal may have shutters open for odd numbered frames while having the shutters shut/closed for even numbered frames. Alternatively and/or concurrently, an individual with headgear configured to watch the second 2D video signal may have shutters shut/closed for odd numbered frames while having the shutters open for even numbered frames. As should be understood, the example of FIG. 5 with an odd and even sequence of different 2D content frames is but one example and the sequence may be in other manners, such as every two frames of first 2D content followed by one frame of second 2D content, two frames of first 2D content followed by two frame of second 2D content, and/or other sequences.

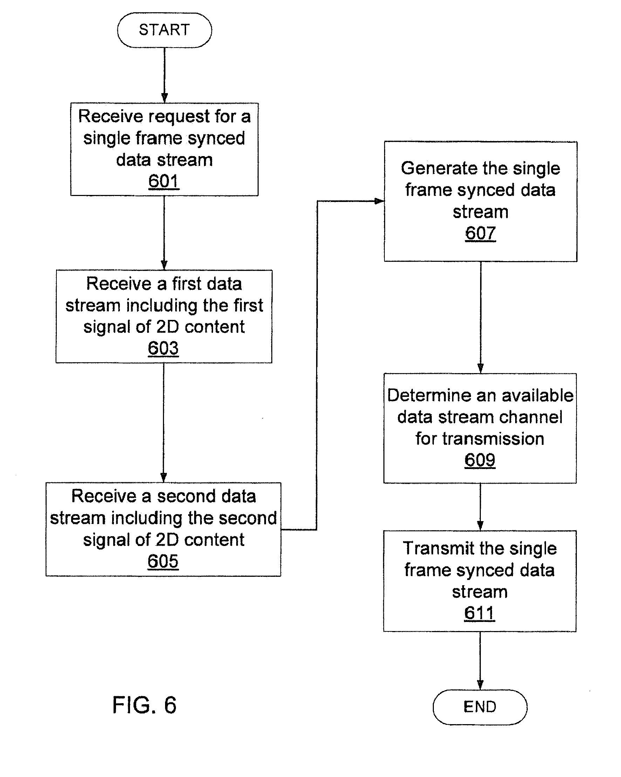

FIG. 6 is an illustrative flowchart of a method for generation and transmission of a single frame synced data stream in accordance with one or more aspects of the disclosure herein. Although described in FIG. 6 with reference to a single frame synced data stream, one or more aspects of the present disclosure may be utilized and/or implemented with respect to multiple frame synced data streams. FIG. 6 may illustrate an example where a central location, such as central office 106 in FIG. 1, may be configured to operate a process for transmitting a single frame synced data stream with two different 2D video signals. In 601, a request for a single frame synced data stream may be received by a computing device, such as a content server 107 of a central office 106. The request may include a request to receive a single data stream that includes at least two different signals of 2D video content. Such a request may originate from a computing device of an end user, such as a set-top box or gateway 202 at the user premises. The end user may enter a request to receive two different 2D video signals as part of a single video signal.

Proceeding to 603, a first data stream including the first signal of 2D video content may be received or accessed. The first signal of 2D video content may originate from a first content source, such as content source 100A in FIG. 1. In 605, a second data stream including the second signal of 2D video content may be received or accessed. The second signal of 2D video content may originate from a second content source, such as content source 100B in FIG. 1. Moving to 607, the single frame synced data stream may be generated from the received first and second data streams. The single frame synced data stream may be generated by termination system 108 in FIG. 1. The single frame synced data stream may include alternating frames of the 2D video content of the first signal and the 2D video content of the second signal. The alternating frames of the 2D video content of the first signal and the 2D video content of the second signal may include frames with the frames of the 2D video content of the first signal occupying the left half of the frame, as in a side-by-side configuration, and the 2D video content of the second signal occupying the right half of the frame.

In 609, an available data stream channel for transmission of the single frame synced data stream may be determined. For example, a central office 106 may include a plurality of available transmission data stream channels dedicated for use for transmission of two different 2D video signals in a single frame synced date stream. In response to generation of the request frame synced data stream, the system may determine an available transmission data stream channel of the plurality in which to transmit the requested data stream across a network, such as network 110. Proceeding to 611, the single frame synced data stream may be transmitted to one or more end user devices, such as user premises 109 through network 110. In another example, the determination in 609 may be determining that another end user has already requested the same single frame synced data stream of two particular 2D video signals. As such, the determination of an available transmission data stream may include determining an existing data stream channel in use and 611 may include transmitting the same existing frame synced data stream to an end user. In the example of FIG. 6, the user may have a choice on what channel to watch before it is transmitted.

FIGS. 7A-7B illustrate example environments for multiple individuals to watch different signals of 2D video content outputted from a single display device in accordance with one or more aspects of the present disclosure. FIGS. 7A-7B illustrate example environments where individuals may view different 2D video signals in a common space without the need for visual headgear/glasses. In the example environment of FIG. 7A, three individuals, individual 705, individual 707, and individual 709, may be in a common living space 401 and may desire to watch two different signals of video content. Individual 705 may want to watch a sitcom being shown by a particular TV network on one channel while individuals 707 and 709 may want to watch a theatrical performance being shown on a different channel. The two video signals, the sitcom and the theatrical performance, may be outputted on a single display 703. In other examples, more than two video signals may be implemented by utilizing higher frame rates.

Display device 703 may be a television monitor that is configured to output two 2D video signals simultaneously on the television monitor without the need for an individual to wear headgear. In the example of FIG. 7A, individual 705 may see a first 2D video signal since she is viewing within a viewing zone 755 outputted from the display device 703. Alternatively and/or concurrently, individuals 707 and 709 may see a second different 2D video signal since they are viewing within a different viewing zone 757 outputted from the display device 703. In this example, display device 703 may be configured to allow any individual within viewing zone 755 only to see the first 2D video signal and to allow any individual within viewing zone 757 only to see the second 2D video signal. For audio, one or more of the individuals in one area of the common space 401 may have headphones to receive the audio signal associated with the respective 2D video signal as described herein. However, no individual needs to have headgear for viewing purposes. Alternatively, a directional sound system may be employed such as the Audio Spotlight® by Holosonics® to provide the appropriate audio for the particular viewing zones 755 and 757. Display device 703 may output in this manner to allow an individual to see in particular a viewing zone without headgear. In such an example, display device 703 may be an auto-stereoscopic device. Display device 703 may include a special coating on the display of the device, such as the monitor of a television. such that if an individual is standing in certain spots in front of the device, the individual would be able to get the two images that are combined together. At other certain spots in front of the device, an individual can get different views. For 2D adaptation, depending on where an individual stands, the individual may see a different 2D channel of a number of 2D channels being shown simultaneously.

Similar to the implementation in FIG. 7A, in the example environment of FIG. 7B, three or more individuals, individual 705, individual 707, and individual 709, may be in a common living space 401 and may desire to watch three or more different signals of video content. Individual 705 may want to watch a first 2D video signal, individual 707 may want to watch a different second 2D video signal, and individual 709 may want to watch a third still different 2D video signal. The three or more video signals may be outputted on the single display 733.

Display device 733 may be a television monitor that is configured to output three or more 2D video signals simultaneously on the television monitor without the need for an individual to wear headgear. No individual may see a first 2D video signal since no one is viewing within viewing zone 771 outputted from the display device 733. Individual 705 may see a second 2D video signal since she is viewing within viewing zone 773 outputted from the display device 733. Individuals 707 and 709 may see third and fourth second 2D video signals since they are viewing within respective different viewing zones 775 and 777 outputted from the display device 733. In still other embodiments, a first 2D video signal may be outputted from display device 733 within viewing zones 771 and 775, while a second 2D video signal may be outputted from display device 733 within viewing zones 773 and 777. In yet other embodiments, a first 2D video signal may be outputted from display device 733 within viewing zones 771 and 777, while a second 2D video signal may be outputted from display device 733 within viewing zones 773 and 775. Any of a number of configurations greater or less than four viewing zones and any viewing environments may be implemented as well in accordance with one or more features of the present disclosure.

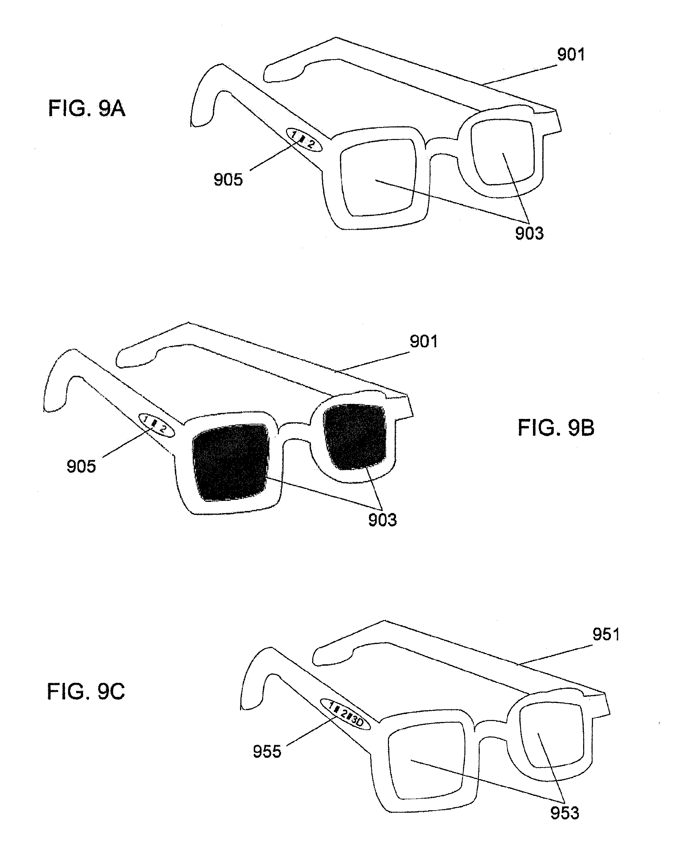

FIGS. 9A-9C illustrate example active shutter glasses in accordance one or more aspects of the disclosure herein. The active shutter glasses examples may be 3D enabled active shutter glasses that have been modified in accordance with one or more aspects described herein. FIGS. 9A and 9B illustrate active shutter glasses 901 with an input mechanism 905. Input mechanism 905 may be a button, switch, and/or other input mechanism to allow a user to select between two or more options. The two or more options may be a user-defined request to view a particular signal of 2D video content outputted by a display device being utilized with the glasses 901. In other examples not shown, input mechanism 905 may be accessed by an individual through a gateway, such as gateway 202 in FIGS. 2 and 3. For example, an individual may access a selection screen as part of an electronic program guide associated with the gateway. In response to selection of a particular 2D video content for viewing, the gateway may cause the active shutter glasses 901 to act accordingly, as described herein, for the viewer to watch the particular 2D video content and not have access to watching other 2D video content also outputted by a display device. In active shutter, there may a synchronization signal that the display device sends out to sync the glasses 901. In one example, this synchronization signal may trigger the operation of the glasses 901 but the behavior may be different depending if it is in a first mode or a second mode. For passive polarization, the glasses in both the right and left lens may be polarized the same way.

In the example of FIGS. 9A-9B, the input mechanism 905 includes two options for entry by a user. The user may select to have the glasses 901 operate in a first mode or a second mode. If the user selects to have the glasses operate in a first mode, the glasses may be configured to open the lenses 903 as shown in FIG. 9A for a first frame of 2D video content to allow a user to see a first 2D video signal. For the next frame, when the next frame is for a second 2D video signal, the glasses 901 may be configured to shut/close the lenses 903 as shown in FIG. 9B for the next frame of 2D video content to restrict the user from seeing the second 2D video signal. In this first mode, the glasses 901 may open and shut/close the lenses 903 alternatively for each frame in order to allow a user to watch the first 2D video signal, as selected by the user via the input mechanism 905, and to restrict the user from watching the second 2D video signal, since the user did not select a second mode for watching the second 2D video signal. If the user selects to have the glasses operate in a second mode, the glasses may be configured to shut/close the lenses 903 as shown in FIG. 9B for a first frame of 2D video content to restrict the user from watching a first 2D video signal. For the next frame, when the next frame is for a second 2D video signal, the glasses 901 may be configured to open the lenses 903 as shown in FIG. 9A for the next frame of 2D video content to allow the user to see the second 2D video signal. Similarly as described above with respect to the first mode, in the second mode, the glasses 901 may open and shut/close the lenses 903 alternatively for each frame in order to allow a user to watch the second 2D video signal, as selected by the user via the input mechanism 905, and to restrict the user from watching the first 2D video signal, since the user did not select the first mode for watching the first 2D video signal.

FIG. 9C illustrates an example where active shutter glasses 951 may be 3D enabled active shutter glasses that have been modified in accordance with one or more aspects described herein. Active shutter glasses 951 include an input mechanism 955. Input mechanism 955 may be a button, switch, and/or other input mechanism to allow a user to select between three or more options. The first and second options may be a user-defined request to view a particular signal of 2D video content outputted by a display device being utilized with the glasses 951. A third option may be a user-defined request to view a particular 3D video content outputted by a display device being utilized with the glasses 951. Although not described herein, additional modes for additional 2D video signals being outputted by a display device may be included with the input mechanism 955 accounting for more input options. In other examples not shown, input mechanism 955 may be accessed by an individual through a gateway, such as gateway 202 in FIGS. 2 and 3. For example, an individual may access a selection screen as part of an electronic program guide associated with the gateway. In response to selection of particular video content for viewing, the gateway may cause the active shutter glasses 951 to act accordingly, as described herein, for the viewer to watch the particular video content and not have access to watching other video content also outputted by a display device. For passive polarization, the glasses may have interchangeable lenses or separate glasses may be utilized for each mode.

In the example of FIG. 9C, the input mechanism 955 includes three options for entry by a user. Choosing option 1 or 2 by the input mechanism 955 may allow for similar operations as described above for FIGS. 9A-9B for a first mode and a second mode of operation. In addition, the user may select to have the glasses 951 operate in a third mode. If the user selects to have the glasses 951 operate in a third mode, the glasses may be configured to open the lens 953 for the right eye for one frame while shutting/closing the lens for the left eye of the user. For the next frame, the glasses 951 may be configured to shut/close the lens 953 for the right eye while opening the lens for the left eye of the user. In this third mode, the glasses 951 may open and shut/close respective lenses alternatively for each frame in order to allow a user to watch 3D video content, as entered by the user via the input mechanism 955. Although not described herein, additional modes for additional 2D video signals being outputted by a display device may be included with the input mechanism 955 accounting for more input options. Although not shown in the drawings, it should be understood that one or more aspects of the modes may be controlled by a display device in place of an input mechanism associated with glasses.

In the examples of FIGS. 9A-9C, headphones for reception of an associated audio signal with the 2D or 3D video signal may be included with the glasses 901 or 951 and/or separately from the glasses 901 or 951. Alternatively, a directional sound system may be employed as previously discussed. In some embodiments as described herein, one individual may utilize headgear, such as glasses 901 operating in a first mode, for watching a first 2D video signal while listening to the associated audio outputted from the display device rendering outputting the first 2D video signal. A second individual may utilize a separate headgear, such as glasses 901 operating is a second mode, for watching a second 2D video signal while listening to the associated audio with a pair of headphones included within the glasses 901 and/or associated with the glasses 901.

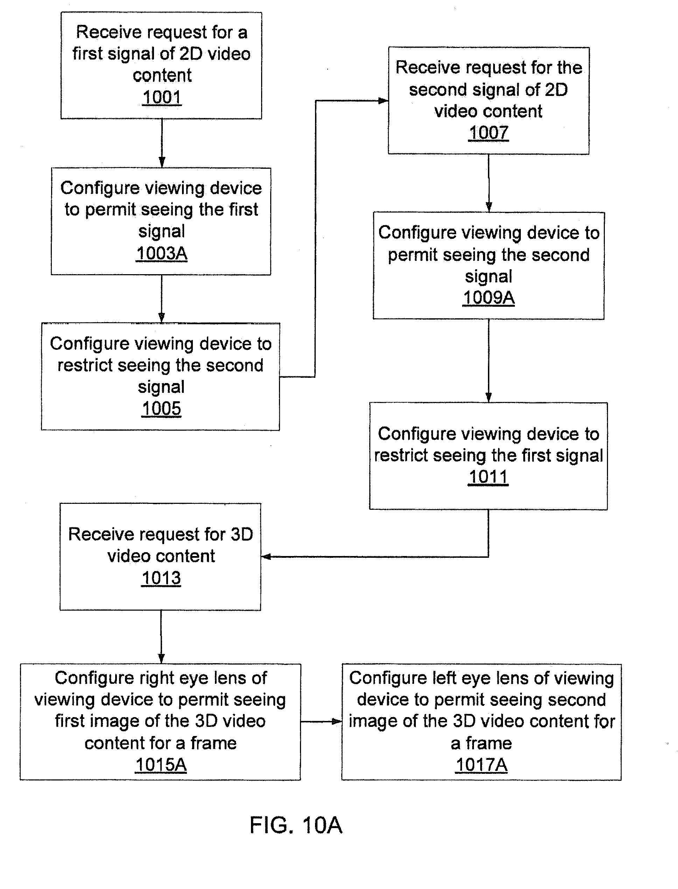

FIG. 10A illustrates a flowchart of an example method for switching operation of 3D enabled active shutter glasses in accordance with one or more aspects of the disclosure herein. FIG. 10A may illustrate an example where 3D enabled active shutter glasses, such as the glasses 901 and/or 951 in FIGS. 9A-9C, may be configured to operate a process for allowing a user to switch between watching different 2D and 3D video content. In 1001, a user-defined request to view a first signal of 2D video content outputted by a display device may be received. Such a user-defined request may be entry in an input mechanism, such as input mechanism 905 and/or 955 in FIGS. 9A-9C. In 1003A, a device is configured for viewing the first signal, such as where both lenses for the right eye of a viewer and the left eye of the viewer may be configured to permit the viewer to see the first signal of 2D video content displayed by the display device. For example, the lenses may be configured to be in an open state for odd numbered frames of 2D video content outputted by the display device. In 1005, the device is configured for restricting viewing of a second signal, such as where both lenses for the right eye of the viewer and the left eye of the viewer may be configured to restrict the viewer from seeing the second signal of 2D video content displayed by the display device. For example, the lenses may be configured to be in a closed/shut state for even numbered frames of 2D video content outputted by the display device.

Moving to 1007, a user-defined request for the second signal of 2D video content outputted by the display device may be received. Such a user-defined request may be entered in an input mechanism, such as input mechanism 905 and/or 955 in FIGS. 9A-9C. In 1009A, the device is configured for viewing the signal signal, such as where both lenses for the right eye of the viewer and the left eye of the viewer may be configured to permit the viewer to see the second signal of 2D video content outputted by the display device. For example, the lenses may be configured to be in an open state for even numbered frames of 2D video content outputted by the display device. In 1011, the device is configured for restricting viewing the first signal, such as where both lenses for the right eye of the viewer and the left eye of the viewer may be configured to restrict the viewer from seeing the first signal of 2D video content outputted by the display device. For example, the lenses may be configured to be in a closed/shut state for odd numbered frames of 2D video content outputted by the display device.

Proceeding to 1013, a user-defined request for 3D video content outputted by the display device may be received. Such a user-defined request may be entered in an input mechanism, such as input mechanism 955 in FIG. 9C. In 1015A, the lens for the right eye of the viewer may be configured to permit the viewer to see a first image of the 3D video content outputted by the display device. For example, the right lens may be configured to be in an open state for odd numbered frames of 3D video content outputted by the display device and closed/shut for even numbered frames of 3D video content outputted by the display device. In 1017A, the lens for the left eye of the viewer may be configured to permit the viewer to see a second image of the 3D video content outputted by the display device. For example, the left lens may be configured to be in an open state for even numbered frames of 3D video content outputted by the display device and closed/shut for odd numbered frames of 3D video content outputted by the display device. Accordingly, a user may switch between two or more 2D video signals and at least one 3D video signal by selection of an input on her glasses.

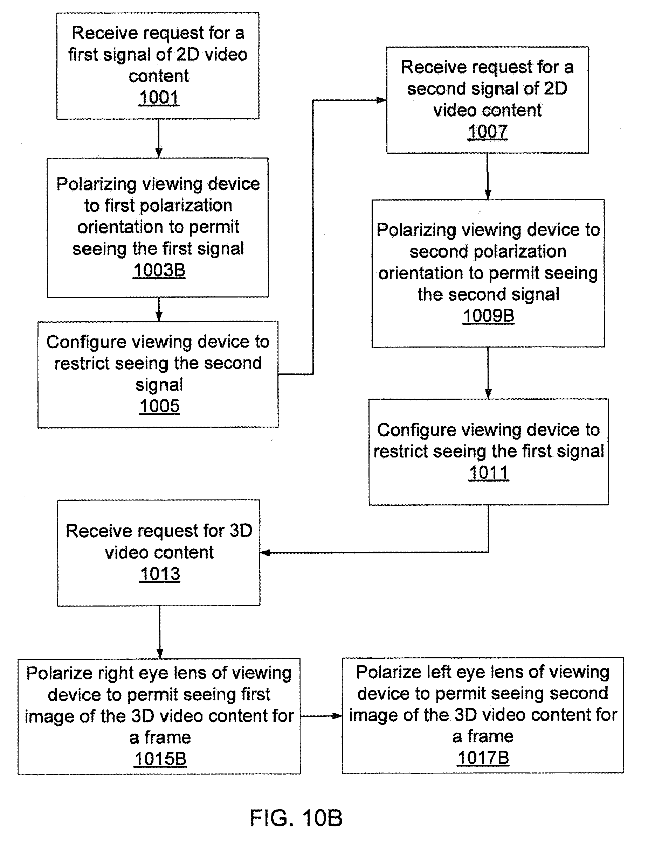

FIG. 10B illustrates a flowchart of an example method for switching operation of 3D polarized glasses in accordance with one or more aspects of the disclosure herein. FIG. 10B may illustrate an example where passive polarization technology glasses may be configured to operate a process for allowing a user to switch between watching different 2D and 3D video content. In 1001, a user-defined request for a first signal of 2D video content outputted by a display device may be received. Such a user-defined request may be entered in an input mechanism associated with the passive polarization glasses. In 1003B, a device is configured for viewing the first signal, such as where both lenses for the right eye of a viewer and the left eye of the viewer may be polarized to a first polarization orientation to permit the viewer to see the first signal of 2D video content outputted by the display device. For example, the lenses may be configured to allow a viewer to see the left half of side-by-side synced frames of 2D video content outputted by the display device. In 1005, the device is configured for restricting viewing a second signal, such as where both lenses for the right eye of the viewer and the left eye of the viewer may be configured to restrict the viewer from seeing the second signal of 2D video content outputted by the display device. For example, the lenses may be configured to restrict the viewer from seeing the right half of side-by-side synced frames of 2D video content outputted by the display device.

Moving to 1007, a user-defined request for the second signal of 2D video content outputted by the display device may be received. Such a user-defined request may be entered in an input mechanism associated with the passive polarization glasses. In 1009B, the device is configured for viewing the second signal, such as where both lenses for the right eye of a viewer and the left eye of the viewer may be polarized to a second polarization orientation to permit the viewer to see the second signal of 2D video content outputted by the display device. For example, the lenses may be configured to allow a viewer to see the right half of side-by-side synced frames of 2D video content outputted by the display device. In 1011, the device is configured for restricting viewing the first signal, such as where both lenses for the right eye of the viewer and the left eye of the viewer may be configured to restrict the viewer from seeing the first signal of 2D video content outputted by the display device. For example, the lenses may be configured to restrict the viewer from seeing the left half of side-by-side synced frames of 2D video content outputted by the display device.

Proceeding to 1013, a user-defined request for 3D video content outputted by the display device may be received. Such a user-defined request may be entered in an input mechanism associated with the passive polarization glasses. In 1015B, the lens for the right eye of the viewer may be polarized to permit the viewer to see a first image of the 3D video content for a frame outputted by the display device. In 1017B, the lens for the left eye of the viewer may be polarized to permit the viewer to see a second image of the 3D video content for a frame outputted by the display device. Accordingly, a user may switch between two or more 2D video signals and at least one 3D video signal by entry of an input on her glasses.

Other embodiments include numerous variations on the devices and techniques described above. Embodiments of the disclosure include a machine readable storage medium (e.g., a CD-ROM, CD-RW, DVD, floppy disc, FLASH memory, RAM, ROM, magnetic platters of a hard drive, etc.) storing machine readable instructions that, when executed by one or more processors, cause one or more devices to carry out operations such as are described herein.

The foregoing description of embodiments has been presented for purposes of illustration and description. The foregoing description is not intended to be exhaustive or to limit embodiments of the present disclosure to the precise form disclosed, and modifications and variations are possible in light of the above teachings or may be acquired from practice of various embodiments. Additional embodiments may not perform all operations, have all features, or possess all advantages described above. The embodiments discussed herein were chosen and described in order to explain the principles and the nature of various embodiments and their practical application to enable one skilled in the art to utilize the present disclosure in various embodiments and with various modifications as are suited to the particular use contemplated. The features of the embodiments described herein may be combined in all possible combinations of methods, apparatuses, modules, systems, and machine-readable storage media. Any and all permutations of features from above-described embodiments are the within the scope of the disclosure.

## Claims

1. A method comprising:
receiving, at a computing device, a data stream including at least a first and a second uncorrelated two dimensional (2D) video content;
transmitting a first video image of the first 2D video content; and
transmitting a second video image of the second 2D video content of a second signal of the at least two signals.

2. The method of claim 1, wherein the data stream is a single frame synced data stream.

3. The method of claim 1 or 2, further comprising outputting, to a display device, the generated first video image and the generated second video image.

4. The method according to any of the previous claims, wherein the transmitting the first video image of the first 2D video content is for a first frame of video content and the transmitting the second video image of the second 2D video content is for a second frame of video content.

5. The method according to any of the previous claims, further comprising:
outputting, to a first audio output device associated with the display device, a first audio stream associated with the first video image; and
outputting, to a second audio output device, a second audio stream associated with the second video image.

6. The method according to any of the previous claims, wherein the receiving, at the computing device, the data stream includes:
receiving, at the computing device, a first data stream including the first uncorrelated 2D video content;
receiving, at the computing device, a second data stream including the second uncorrelated 2D video content; and
generating the data stream from the received first and second data streams.

7. The method according to any of the previous claims, further comprising:
receiving, at the computing device, a first data stream including the first uncorrelated 2D video content;
receiving, at the computing device, a second data stream including the second uncorrelated 2D video content; and
outputting the data stream including the at least first and second uncorrelated two dimensional (2D) video content as a response to a user-defined request.

8. The method according to any of the previous claims, wherein the first uncorrelated two dimensional (2D) video content is a program of video content and the second uncorrelated two dimensional (2D) video content is web based video content.

9. A method comprising:
receiving, at a device, a first data stream including first 2D video content;
receiving, at the device, a second data stream including second 2D video content, wherein said first and second 2D video content are uncorrelated;
generating a single data stream from the first and second data streams, the single data stream including alternating frames of the first 2D video content and the second 2D video content.

10. The method of claim 9, further comprising:
transmitting, by the device, a first audio stream associated with the first 2D content; and
transmitting, by the device, a second audio stream associated with the second 2D content.

11. The method of claim 9 or 10, further comprising determining, by the device, an available data stream channel for transmission of the single data stream.

12. A method comprising:
causing a first portion of a video viewing device for the right eye of a viewer and a second portion of the video viewing device for the left eye of the viewer to permit the viewer to see first 2D video content on a display device; and
causing the first portion of the video viewing device for the right eye of the viewer and the second portion of the video viewing device for the left eye of the viewer to restrict the viewer from seeing second 2D video content on the display device, wherein said first and second 2D content are uncorrelated.

13. The method of claim 12,
wherein the causing the first portion of the video viewing device for the right eye of the viewer and the second portion of the video viewing device for the left eye of the viewer to permit the viewer to see the first 2D video content outputted by the display device includes, for a first frame of video content, opening a first shutter for a first lens and opening a second shutter for a second lens,
wherein the causing the first portion of the video viewing device for the right eye of the viewer and the second portion of the video viewing device for the left eye of the viewer to restrict the viewer from seeing the second 2D video content outputted by the display device includes, for a second frame of video content, closing the first shutter for the first lens and closing the second shutter for the second lens.

14. The method of claim 12 or 13, wherein the causing the first portion of the video viewing device for the right eye of the viewer and the second portion of the video viewing device for the left eye of the viewer to permit the viewer to see the first 2D video content outputted by the display device includes, for each frame of video content, polarizing a first lens and a second lens of the video viewing device to a same polarization orientation.

15. The method of any one or more of the claims 12-14, further comprising:
receiving a user-defined request for the second 2D video content outputted by the display device;
responsive to the user-defined request, causing the first portion of the video viewing device for the right eye of the viewer and the second portion of the video viewing device for the left eye of the viewer to permit the viewer to see the second 2D video content outputted by the display device; and
causing the first portion of the video viewing device for the right eye of the viewer and the second portion of the video viewing device for the left eye of the viewer to restrict the viewer from seeing the first 2D video content outputted by the display device.
